# EUROPEAN PATENT SPECIFICATION

(11) **EP 0 502 480 B1**
(45) Date of publication and mention of the grant of the patent: **14.08.1996**
(21) Application number: 92103618.2
(22) Date of filing: 03.03.1992
(51) Int. Cl.: C08L 77/06, C08L 79/08, C08L 33/24, C08F 299/08

(54) **Thermoplastic resin compositions**
Thermoplastische Harzzusammensetzungen
Compositions de résine thermoplastiques

(30) Priority: 06.03.1991 JP 39904/91; 03.04.1991 JP 70948/91; 04.04.1991 JP 71790/91
(43) Date of publication of application: 09.09.1992
(73) Proprietor: MITSUBISHI RAYON CO., LTD., Tokyo 104 (JP)
(72) Inventor: Yamamoto, Naoki, Central Research Laboratories, Otake-shi, Hiroshima 739-06 (JP); Nakata, Akira, Central Research Laboratories, Otake-shi, Hiroshima 739-06 (JP); Koshirai, Atsunori, Central Research Laboratories, Otake-shi, Hiroshima 739-06 (JP)
(74) Representative: TER MEER - MÜLLER - STEINMEISTER & PARTNER

(56) References cited:
- EP-A- 0 307 916
- EP-A- 0 308 198
- WO-A-92/13918

## Description

### BACKGROUND OF THE INVENTION

### Field of the Invention

The present invention relates to a thermoplastic resin composition in which a thermoplastic resin such as a polyamide resin, polymethacrylimide resin, polyetherimide resin has been improved in impact resistance while maintaining its mechanical properties such as strength, heat resistance, stiffness and the like.

### Description of the Related Art

Hitherto, there have been proposed many methods for improving the impact resistance of thermoplastic resins such as polyamide resins and the like. Among these, a method of blending a thermoplastic resin and a polyorganosiloxane graft copolymer, which is described in Japanese Patent Application Kokai No. 61-235462 and EP-A2-0332188, is a relatively good method. In this method, however, dispersion of the polyorganosiloxane graft copolymer depends upon interaction between the polymer constituting the outermost layer of the graft copolymer and the matrix resin, so that there is a case wherein an improvement in impact strength is insufficient depending upon properties of the matrix resin. Consequently, compositions developing a more superior impact resistance are being demand.

Also, a method of blending a polyamide and an acid-modified ethylene/propylene copolymer (acid-modified EPR) is proposed, for example, in U.S. Patent No. 4,174,358 and U.S. Patent No. 4,536,541. This method is relatively good among those which are intended to improve the impact resistance of the conventional thermoplastic polyamide resins, but the impact strength at low temperatures of the resins may not be said to have sufficiently been improved. Consequently, compositions developing a more superior impact resistance in a wider temperature range are being demanded.

As a method for improving the impact resistance of thermoplastic polymethacrylimide resins, the present inventors previously proposed a method of blending the resins and a polyorganosiloxane graft copolymer (refer to Japanese Patent Application Kokai No. 1-75553). This method is relatively good among those which are intended to improve the impact resistance of the conventional thermoplastic polymethacrylimide resins, but this improved impact resistance may not be said to be sufficient to use the resins under severer conditions or develop a wider range of use of the resins. Consequently, compositions having a further superior impact resistance are being demanded.

As a method for improving the impact resistance of thermoplastic polyetherimide resins, the present inventors previously proposed a method of blending the resins and a polyorganosiloxane graft copolymer (refer to Japanese Patent Application Kokai No. 1-75563). This method is relatively good among those which are intended to improve the impact resistance of the conventional thermoplastic polyetherimide resins, but this improved impact resistance may not be said to be sufficient to use the resins under severer conditions or develop a wider range of use of the resins. Consequently, compositions having a further superior impact resistance are being demanded.

### SUMMARY OF THE INVENTION

In view of the situation as mentioned above, the present inventors have extensively studied to further improve the impact resistance of polyamide resins, polymethacrylimide resins and polyetherimide resins. As a result, the inventors have found that above every resin further improves in impact resistance and also is superior in both appearance and adhesion property of paint film by blending the resin and a polyorganosiloxane graft copolymer obtained by graft-polymerizing one or more kinds of vinyl monomer containing at least an epoxy group-containing vinyl monomer onto a polyorganosiloxane compound rubber (hereinafter also referred simply to as compound rubber) having a structure in which a polyorganosiloxane rubber component and a polyalkyl (meth)acrylate rubber component have been inseparably united with each other. The present inventors thus attained to the present invention.

The gist of the present invention consists in a thermoplastic resin composition comprising (A) 60 to 99 parts by weight of at least one thermoplastic resin selected from the group consisting of polyamide resins, polymethacrylimide resins and polyetherimide resins and (B) 1 to 40 parts by weight of a polyorganosiloxane graft copolymer obtained by graft-polymerizing one or more kinds of vinyl monomer containing at least an epoxy group-containing vinyl monomer onto a polyorganosiloxane compound rubber having a structure in which a polyorganosiloxane rubber component and a polyalkyl (meth)acrylate rubber component have been inseparably united with each other, the total amount of both the components (A) and (B) being 100 parts by weight.

### DESCRIPTION OF THE PREFERRED EMBODIMENTS

The polyamide resin used in the present invention includes polyamides obtained from an aliphatic, aromatic or alicyclic discarboxylic acid and a diamine, polyamides obtained from aminocarboxylic acids or cyclic lactams. Preferred specific examples include nylon 6, nylon 1·2, nylon 6·6, nylon 4·6, nylon MXD 6, nylon 6/10 copolymer, nylon 6/6·6 copolymer and the like. Particularly, nylon 6 and nylon 6·6 are preferably used.

As the polymethacrylimide resin used in the present invention, those containing 5 wt.% or more of a cyclic imide unit represented by the formula (1) are preferably used: 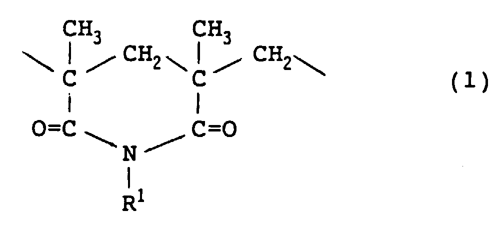 wherein R¹ represents a hydrogen atom, a C₁-C₂₀ alkyl group, a C₆-C₂₀ cycloalkyl, aryl, allyl or alkenyl group, or a C₆-C₂₀ aralkyl group.

Any polymer will do if it contains the above cyclic imide unit. Generally, however, those in which R¹ is a hydrogen atom or a methyl, ethyl, propyl, butyl, phenyl or cyclohexyl group are used.

There is no particular limitation to a method for producing the polymethacrylimide resin, but a method of reacting a methacrylate resin with ammonia or a primary amine at a temperature of 150° to 350°C in an inert solvent is useful. As the above primary amine, methylamine, ethylamine, propylamine, butylamine, aniline and cyclohexylamine are useful. As the inert solvent, a solvent comprising one or more members selected from the group consisting of aromatic hydrocarbons (e.g. benzene, toluene, xylene) and aliphatic alcohols (e.g. methanol, ethanol, propanol) is preferred.

It is preferred for the polymethacrylimide resin to contain the cyclic methacrylimide unit represented by the formula (1) in an amount of 5 wt.% or more, preferably 20 wt.% or more, more preferably 50 wt.% or more. When the cyclic unit content is less than 5 wt.%, it is difficult to obtain resin compositions having a high heat distortion temperature. As the methacrylate resin used to form the polymethacrylimide resin, there are given for example homopolymers of methacrylates and copolymers of the methacrylates with other monomers such as for example other methacrylates, acrylates, acrylic acid, methacrylic acid, styrene, substituted styrenes (e.g. α-methylstyrene).

The methacrylate includes methyl methacrylate, ethyl methacrylate, propyl methacrylate, n-butyl methacrylate, isobutyl methacrylate, tert-butyl methacrylate, cyclohexyl methacrylate, norbornyl methacrylate, 2-ethylhexyl methacrylate, benzyl methacrylate. The acrylate includes methyl acrylate, ethyl acrylate, propyl acrylate, n-butyl acrylate, isobutyl acrylate, tert-butyl acrylate, cyclohexyl acrylate, norbornyl acrylate, 2-ethylhexyl acrylate, benzyl acrylate. These monomers may be used alone or in mixture of two or more of them.

In the present invention, those which are preferred among these methacrylate resins are a methyl methacrylate homopolymer and copolymers of 25 wt.% or more of methyl methacrylate with 75 wt.% or less of the above other monomers. However, the methyl methacrylate homopolymer is most preferred in terms of transparency.

The thermoplastic polyetherimide resin used in the present invention refers to a polymer represented by the formula (2),

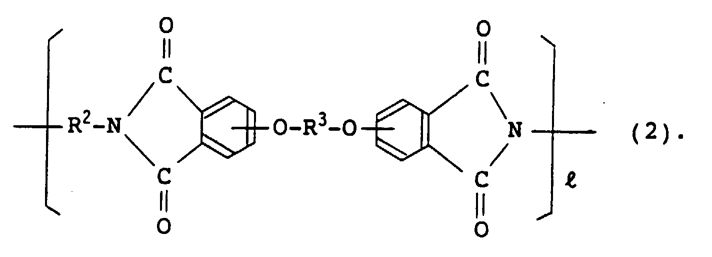

In the above formula, R² and R³ independently represent a divalent organic residue, and their specific examples include the following:

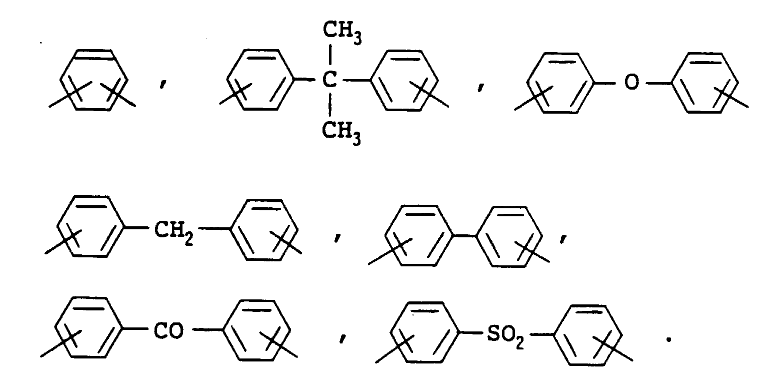

Among thermoplastic polyetherimide resins represented by the formula (2), a polyetherimide resin represented by the following formula is preferably used.

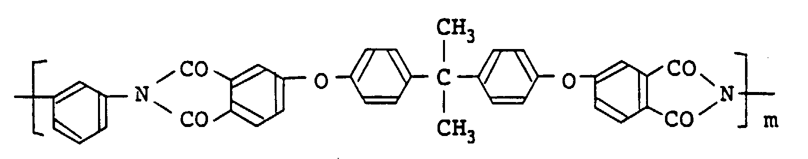

As the polyorganosiloxane rubber used in the present invention, those which are obtained in the form of fine particle by polymerizing organosiloxane, a crosslinking agent for the polyorganosiloxane rubber [hereinafter referred to as crosslinking agent (I)] and optionally a graft-linking agent for the polyorganosiloxane rubber [hereinafter referred to as graft-linking agent (I)], can be used.

As the organosiloxane, three or more-membered cyclic organosiloxanes are given, among which three to six-membered ones are preferably used. Specific examples of preferred cyclic organosiloxane include hexamethylcyclotrisiloxane, octamethylcyclotetrasiloxane, decamethylcyclopentasiloxane, dodecamethylcyclohexasiloxane, trimethyltriphenylcyclotrisiloxane, tetramethyltetraphenylcyclotetrasiloxane, octaphenylcyclotetrasiloxane. These organosiloxanes are used alone or in mixture of two or more of them. The amount of the cyclic organosiloxane used is preferably 60 wt.% or more, more preferably 70 wt.% or more of the polyorganosiloxane rubber.

As the crosslinking agent (I), trifunctional or tetrafunctional silane crosslinking agents, i.e. silane compounds having three or four alkoxy groups are used. Specific examples of the silane compound include trimethoxymethylsilane, triethoxyphenylsilane, tetramethoxysilane, tetraethoxysilane, tetra-n-propoxysilane, tetrabutoxysilane. Tetra-functional silane compounds are preferred, among which tetraethoxysilane is particularly preferably used. The amount of the crosslinking agent (I) used is preferably 0.1 to 30 wt.%, more preferably 0.5 to 10 wt.% of the polyorganosiloxane rubber. When the amount of the crosslinking agent (I) is less than 0.1 wt.%, molded products obtained from the composition become poor in impact strength, and also their appearance tends to become poor. If the agent (I) is used in an amount exceeding 30 wt.%, it does not contribute to further formation of the crosslinked structure.

The graft-linking agent (I) refers to a siloxane having both a siloxane portion and a functional group which function as follows: The former participates in the polymerization to be incorporated into the polyorganosiloxane rubber, and the latter does not participate in the polymerization, but reacts at the subsequent step in which the poly(meth)acrylate rubber is prepared in the presence of the polyorganosiloxane rubber in order to prepare the compound rubber. As specific examples of the siloxane, compounds which form a unit represented by either one of the following formulae are used:

CH₂=CR⁵-COO-(CH₂)ₚ-SiR⁴ ₙO_{(3-n)/2} (I-1)

CH₂=CH-SiR⁴ ₙO_{(3-n)/2} (I-2)

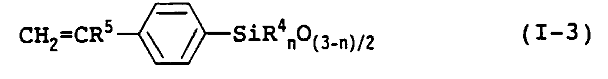

or

HS-(CH₂)ₚ-SiR⁴ ₙO_{(3-n)/2} (I-4)

wherein R⁴ represents a methyl, ethyl, propyl or phenyl group, R⁵ represents a hydrogen atom or a methyl group, n represents an integer of 0, 1 or 2, and p represents an integer of 1 to 6.

Among these, (meth)acryloyloxysiloxane which can form the unit represented by the formula (I-1), because of its grafting efficiency being high, can form effective graft chains, so that it is advantageous in terms of development of impact resistance. As the siloxane which forms the unit represented by the formula (I-1), methacryloyloxysiloxane is particularly preferred.

As those which form the unit of the formula (I-2), vinyltrimethoxysilane, vinylmethyldimethoxysilane can be given.

As those which form the unit of the formula (I-3), 4-vinylphenyldimethoxymethylsilane, 4-vinylphenyltrimethoxysilane can be given.

As those which form the unit of the formula (I-4), γ-mercaptopropyldimethoxymethylsilane, γ-mercaptopropyltrimethoxysilane, γ-mercaptopropyldiethoxyethylsilane can be given.

Specific examples of methacryloyloxysiloxane include β-methacryloyloxyethyldimethoxymethylsilane, γ-methacryloyloxypropylmethoxydimethylsilane, γ-methacryloyloxypropyldimethoxymethylsilane, γ-methacryloyloxypropyltrimethoxysilane, γ-methacryloyloxypropyldiethoxymethylsilane, γ-methacryloyloxypropylethoxydiethylsilane, δ-methacryloyloxybutyldiethoxymethylsilane. Of these, γ-methacryloyloxypropyldimethoxymethylsilane and γ-methacryloyloxypropyltrimethoxysilane can be given as more preferred ones.

The amount of the graft-linking agent (I) used is 0 to 10 wt.%, preferably 0 to 5 wt.% of the polyorganosiloxane rubber.

The polyorganosiloxane rubber can be obtained in the form of latex by the method, for example, described in U.S. Patent No. 2,891,920, U.S. Patent No. 3,294,725. In the present invention, it is preferred for example to produce the polyorganosiloxane rubber by the method in which a mixed solution of organosiloxane, the crosslinking agent (I) and the graft-linking agent (I) is shear-mixed with water with, for example, a homogenizer in the presence of a sulfonic acid emulsifier such as an alkylbenzenesulfonic acid, an alkylsulfonic acid.

The alkylbenzenesulfonic acid is preferred because it acts as an emulsifier for organosiloxane and at the same time acts as a polymerization initiator. In this case, it is preferred to use a metal salt of an alkylbenzenesulfonic acid or alkylsulfonic acid together with the alkylbenzenesulfonic acid because the metal salt has an effect to keep the polymer stable during the graft polymerization.

The polymerization can be stopped by neutralizing the latex with the aqueous solution of an alkali (e.g. sodium hydroxide, potassium hydroxide, sodium carbonate).

The compound rubber used in the present invention can be synthesized by adding alkyl (meth)acrylate, a crosslinking agent for alkyl (meth)acrylate [hereinafter referred to as crosslinking agent (II)] and a graft-linking agent for alkyl (meth)acrylate [hereinafter referred to as graft-linking agent (II)] to the above polyorganosiloxane rubber latex to impregnate the polyorganosiloxane rubber particles with these components and then polymerizing these components.

As the alkyl (meth)acrylate used to prepare the compound rubber, there can be given the acrylate of a straight-chain or branched-chain alkyl group having 1 to 8 carbon atoms and the methacrylate of an alkyl group having 6 to 12 carbon atoms. Specific examples of these (meth)acrylates include methyl acrylate, ethyl acrylate, n-propyl acrylate, isopropyl acrylate, n-butyl acrylate, isobutyl acrylate, sec-butyl acrylate, 2-methylbutyl acrylate, 3-methylbutyl acrylate, 3-pentyl acrylate, hexyl acrylate, n-heptyl acrylate, 2-heptyl acrylate, n-octyl acrylate, 2-octyl acrylate, 2-ethylhexyl acrylate, hexyl methacrylate, octyl methacrylate, decyl methacrylate, n-lauryl methacrylate, 2-ethylhexyl methacrylate. Of these, n-butyl acrylate can be given as a preferred one.

As the crosslinking agent (II), (meth)-acrylates having two or more polymerizable unsaturated bonds are used. Specific examples thereof include ethylene glycol dimethacrylate, propylene glycol dimethacrylate, 1,3-butylene glycol dimethacrylate, 1,4-butylene glycol dimethacrylate.

The graft-linking agent (II) is polymerized, at the time of polymerization for production of the polyalkyl (meth)acrylate rubber, together with other components to be incorporated into the rubber. However, at least a part of the polymerizable unsaturated groups of the agent (II) remains unreacted at that time, and at the time of the subsequent graft polymerization, the remaining unsaturated group is polymerized together with the graft branch component. In other words, the graft-linking agent (II) is a monomer having two or more polymerizable unsaturated bonds different in reactivity. Specific examples of the graft-linking agent (II) include allyl methacrylate, triallyl cyanurate, triallyl isocyanurate. Allyl methacrylate has functions of both the crosslinking agent (II) and graft-linking agent (II) as described below. That is, at the time of preparation of the polyalkyl (meth)acrylate rubber by polymerization, a part of allyl methacrylate reacts at both of the two unsaturated groups to form a crosslinked structure, and the remainder reacts at only one of the unsaturated groups, the other unsaturated group remaining free even after formation of the polyalkyl (meth)acrylate rubber and reacting to form a graft bond at the time of the subsequent graft polymerization.

Each of these crosslinking agent (II) and graft-linking agent (II) may be a simple compound or a mixture of two or more simple compounds. The amount of any one of these crosslinking agent (II) and graft-linking agent (II) used is 0.1 to 10 wt.% of the polyalkyl (meth)acrylate rubber component. When allyl methacrylate is used as both the crosslinking agent (II) and the graft-linking agent (II), it will suffice to use it in an amount of 0.2 to 20 wt.%.

For carrying out the polymerization of the polyalkyl (meth)acrylate rubber components, it will suffice to add the above alkyl (meth)acrylate and crosslinking agent (II) and graft-linking agent (II) to the polyorganosiloxane rubber latex previously neutralized by adding the aqueous solution of an alkali (e.g. sodium hydroxide, potassium hydroxide, sodium carbonate), thereby impregnating the polyorganosiloxane rubber particles with these components, and then polymerize these components by the action of a conventional radical polymerization initiator. With the progress of the polymerization, the crosslinked network of the polyalkyl (meth)acrylate rubber entangled with that of the polyorganosiloxane rubber is formed to obtain the latex of a compound rubber comprising the polyorganosiloxane rubber component and polyalkyl (meth)acrylate rubber component which are substantially inseparable from each other. It is preferred for this compound rubber to have a gel content of 80% or more when the rubber is extracted with toluene at 90°C for 4 hours.

A preferred compound rubber is one in which the main skeleton of the polyorganosiloxane rubber component has a repeating unit derived from dimethylsiloxane, and the main skeleton of the polyalkyl (meth)acrylate rubber component has a repeating unit derived from n-butyl acrylate.

The proportion of each of the polyorganosiloxane rubber component and polyalkyl (meth)acrylate rubber component constituting the compound rubber to the total weight of the both is preferably 1 to 99 wt.% for the former and 1 to 99 wt.% for the latter, but it is more preferred that the proportion is 5 to 99 wt.% for the former and 5 to 95 wt.% for the latter.

The polyorganosiloxane graft copolymer used in the present invention is obtained by graft-polymerizing one or more kinds of vinyl monomer containing at least an epoxy group-containing vinyl monomer onto the compound rubber thus obtained. One or more kinds of vinyl monomer containing an epoxy group-containing vinyl monomer, referred to herein, may comprise the epoxy group-containing vinyl monomer alone or may be a mixture of the epoxy group-containing vinyl monomer and other copolymerizable vinyl monomer.

The epoxy group-containing vinyl monomer includes glycidyl (meth)acrylate, vinyl glycidyl ether, allyl glycidyl ether, glycidyl ether of hydroxyalkyl (meth)acrylate, glycidyl ether of polyalkylene glycol (meth)acrylate, diglycidyl itaconate. Among these, one or more members selected from the group consisting of glycidyl (meth)acrylate and diglycidyl itaconate are preferred.

Other vinyl monomers copolymerizable with the epoxy group-containing vinyl monomer include various vinyl monomers such as methacrylates (e.g. methyl methacrylate, 2-ethylhexyl methacrylate), acrylates (e.g. methyl acrylate, ethyl acrylate, butyl acrylate), aromatic alkenyl compounds (e.g. styrene, α-methylstyrene, vinyltoluene), vinyl cyanide compounds (e.g. acrylonitrile, methacrylonitrile). Of these vinyl monomers, methyl methacrylate, butyl acrylate and styrene are preferably used. One or more members of these vinyl monomers may be used in combination with the epoxy group-containing vinyl monomer.

The polyorganosiloxane graft copolymer used in the present invention has an epoxy group, so that when this graft copolymer and a thermoplastic resin (e.g. polyamide resins, polymethacrylimide resins, polyetherimide resins) are preferably fusion-mixed, more preferably melt-kneaded with an extruder, the epoxy group of the graft copolymer reacts with the residual functional group of the thermoplastic resin to form in part a bond between the graft copolymer and the thermoplastic resin. As a result, the product formed by the reaction works as a compatibilizer for both the graft copolymer and the thermoplastic resin to improve the compatibility between the both. Because of this, the composition of the present invention can develop a high impact strength.

In the present invention, the amount of the epoxy group-containing vinyl monomer, which is contained in one or more kinds of vinyl monomer containing at least the epoxy group-containing vinyl monomer used in graft polymerization, is preferably 10 wt.% or more, more preferably 20 wt.% or more. Further, the amount of a component derived from the epoxy group-containing vinyl monomer, which is contained in the polyorganosiloxane graft copolymer, is preferably 1 to 30 wt.%, more preferably 2 to 20 wt.%. When the amount of the above component is less than 1 wt.%, development of impact strength becomes insufficient, and if the component is used in an amount exceeding 30 wt.%, a further higher effect to improve impact strength is not obtained.

The amount of a component derived from one or more kinds of vinyl monomer containing at least an epoxy group-containing vinyl monomer, which is contained in the polyorganosiloxane graft copolymer, is preferably 2 to 30 wt.%, more preferably 5 to 20 wt.% of the polyorganosiloxane graft copolymer. When the amount of the component is less than 2 wt.%, compatibility between the polyorganosiloxane graft copolymer and the thermoplastic resin which is a matrix resin becomes insufficient, so that development of impact resistance also becomes insufficient. When it exceeds 30 wt.%, the rubber content decreases, so that development of impact resistance becomes likewise insufficient.

The polyorganosiloxane graft copolymer used in the present invention can be separated and recovered by adding the above vinyl monomer to the latex of the compound rubber, polymerizing the vinyl monomer in one stage or in multiple stages by the radical polymerization technique, and pouring the resulting polyorganosiloxane graft copolymer latex into a hot water in which a metal salt (e.g. calcium chloride, magnesium sulfate) has been dissolved to salt-out and coagulate the graft copolymer.

When the average particle size of the graft copolymer used in the present invention is less than 0.08 µm, the impact resistance of the resulting thermoplastic resin composition tends to become insufficient. When it is larger than 0.5 µm, the impact resistance tends to become likewise insufficient, and besides molded products obtained from the resin composition tends to become poor in surface appearance. Consequently, it is preferred for the average particle size to be in a range of 0.08 to 0.5 µm.

In order to obtain the graft copolymer having such the average particle size, it is desirable to produce the polyorganosiloxane rubber and compound rubber by emulsion polymerization, and graft-polymerize one or more kinds of monomer containing an epoxy group-containing vinyl monomer in one stage or in multiple stages in the presence of the latex obtained above. When multi-stage graft polymerization is carried out with both the epoxy group-containing vinyl monomer and the monomer containing no epoxy group, it is preferred to add one or more kinds of monomer containing the epoxy group-containing vinyl monomer at least at the last stage. In this case, the monomer alone containing no epoxy group may be graft-polymerized at the pre-stage.

The average particle size of the polyorganosiloxane graft copolymer can be measured by the quasi-elastic light scattering method using an aqueous dilute solution of the latex as a sample solution.

In the graft polymerization, the component alone corresponding to the branch of the graft copolymer polymerizes by itself without grafting onto the trunk component of graft copolymer to produce in part the so-called free polymer as by-product. In other words, a mixture of the desired graft copolymer and the free polymer is obtained by the graft polymerization. In the present invention, however, this mixture is referred to as "graft copolymer".

The thermoplastic resin composition of the present invention comprises (A) 60 to 99 parts by weight of at least one thermoplastic resin selected from the group consisting of polyamide resins, polymethacrylimide resins and polyetherimide resins and (B) 1 to 40 parts by weight of a polyorganosiloxane graft copolymer, the total weight of both the components being 100 parts by weight. When the amount of the component (B) is less than 1 part by weight, development of impact strength becomes insufficient, and when it exceeds 40 parts by weight, the strength, stiffness and heat resistance of molded products obtained from the composition tend to be injured. Such the amounts are not preferred.

As far as the composition of the present invention contains the above resin components in the above blending ratio, a filler may further be incorporated into the composition, if necessary. As the filler, those having various forms such as a fibrous form, granular form, powdery form, etc. may be used. Such the filler includes glass fibers, carbon fibers, potassium titanate, asbestos, silicon carbide, ceramics fibers, metal fibers, silicon nitride, aramide fibers, barium sulfate, calcium sulfate, calcium silicate, calcium carbonate, magnesium carbonate, antimony trioxide, zinc oxide, titanium oxide, magnesium oxide, iron oxide, molybdenum disulfide, mica, talc, kaolin, pyrophyllite, bentonite, sericite, zeolite, wollastonite, ferrite, graphite, gypsum, glass beads, glass balloons, quartz.

When the filler is blended, its amount shall be 10 to 300 wt.% based on the total weight of the components (A) and (B). When the amount is less than 10 wt.%, an effect to improve the heat resistance and mechanical strength owing to blending of the filler is small, and when it exceeds 300 wt.%, the melt-flowability of the composition lowers. Such the amounts are not preferred.

Into the resin composition of the present invention may be incorporated if necessary plasticizers, flame retardants, lubricants, pigments.

The composition of the present invention comprises at least one thermoplastic resin selected from the group consisting of polyamide resins, polymethacrylimide resins and polyetherimide resins and the polyorganosiloxane graft copolymer. These components may be melt-mixed by any means. It is preferred, however, that the polyorganosiloxane graft copolymer in a dried condition, at least one thermoplastic resin selected from the group consisting of polyamide resins, polymethacrylimide resins and polyetherimide resins and if necessary the filler are melt-kneaded and pelletized through an extruder.

The present invention will be illustrated specifically with reference to the following examples. In the examples, "part" means "part by weight". The physical properties in the examples and comparative examples were measured by the following methods under an absolutely dried condition.

### Average particle size:

Measured according to the quasi-elastic light scattering method (MALVERN SYSTEM 4600; measurement temperature, 25°C; angle of scattering, 90 degrees) using an aqueous dilute solution of the latex as sample solution.

### Izod impact strength:

Measured according to the method described in ASTM D-256 using a test piece in a thickness of 1/8" with a notch.

### Heat distortion temperature:

Measured according to the method described in ASTM D-648 (low load, 4.6 kg/cm²; high load, 18.6 kg/cm²).

### Surface appearance of molded products:

Judged by visual assessment according to the following standard:
- O: Good
- Δ: Slightly inferior
- ×: Inferior

### Adhesion property of paint film:

A flat plate was prepared by molding, and its surface was coated with an acrylic urethane paint (reaction product of toluenediisocyanate with acrylic polyol). After drying, 11 parallel grooves were cut into the coated surface at intervals of 1 mm in one direction, and the same procedure was repeated in the direction perpendicular thereto, thereby forming 100 grid patterns of 1 mm². An adhesive cellulose tape was applied over the cross-hatched area and peeled off the area in the vertical direction to the surface of the flat plate, and the number of the paint films peeled off the area was counted. The adhesion property of the paint film was evaluated according to the following standard:

The number of peeled paint films
- ⓞ: 10 or less
- O: 11 to 20
- Δ: 21 to 40
- ×: 41 or more

### Referential Example 1

### Production of polyorganosiloxane graft copolymer (S-1)

Two parts of tetraethoxysilane, 0.5 part of γ-methacryloyloxypropyldimethoxymethylsilane and 97.5 parts of octamethylcyclotetrasiloxane were mixed to obtain 100 parts of a siloxane mixture. In 200 parts of distilled water were dissolved 0.67 part of sodium dodecylbenzenesulfonate and 0.67 part of dodecylbenzenesulfonic acid, and to the resulting solution was added 100 parts of the above siloxane mixture. The resulting mixture was preliminarily stirred at 10,000 rpm with a homomixer and then emulsified with a homogenizer under a pressure of 200 kg/cm² to obtain an organosiloxane latex. The latex was transferred to a separable flask equipped with a condenser and a stirring blade, and heated at 80°C for 5 hours with stirring and mixing and then allowed to stand at 20°C for 48 hours. Thereafter, this latex was neutralized to a pH of 7.0 with an aqueous sodium hydroxide solution to obtain a polyorganosiloxane rubber latex (hereinafter referred to as PDMS-1). The conversion of the siloxane mixture to the polyorganosiloxane rubber was 89.1%, and the number average particle size of the polyorganosiloxane rubber was 0.19 µm.

Thirty-five parts of this PDMS-1 was sampled and put in a separable flask equipped with a stirrer. After 175 parts of distilled water was added and the atmosphere of the flask was replaced by nitrogen, the contents of the flask were heated to 50°C. At this temperature, a mixed solution of 78.4 parts of n-butyl acrylate, 1.6 parts of allyl methacrylate and 0.3 part of tert-butyl hydroperoxide was added, after which stirring was continued for 30 minutes to allow this mixed solution to soak into the polyorganosiloxane rubber particles. Thereafter, a mixed solution of 0.002 part of ferrous sulfate, 0.006 part of disodium ethylenediaminetetraacetate, 0.3 part of Rongalite and 10 parts of distilled water was added to start radical polymerization. The reaction mixture was kept at an inner temperature of 70°C for 2 hours to obtain a compound rubber latex. A part of this latex was sampled and dried to obtain a solid matter. This solid matter was extracted with toluene at 90°C for 4 hours, and the gel content was measured to find that it was 95 wt.%.

To this compound rubber latex was dropwise added a mixed solution of 10 parts of glycidyl methacrylate and 0.024 part of tert-butyl hydroperoxide over 15 minutes. Thereafter, the reaction mixture was kept at an inner temperature of 60°C for 2 hours to carry out graft polymerization onto the compound rubber. The conversion of glycidyl methacrylate was 98.5%. The average particle size of the graft copolymer latex obtained was 0.24 µm. This latex was added to an aqueous solution containing 5 wt.% of calcium chloride at 40°C so that the ratio of the latex and aqueous solution was 1:2. Thereafter, the mixed solution was heated to 90°C to coagulate the latex. The coagulated product was washed repeatedly with water, and then the solid matter was separated and dried at 80°C for 24 hours to obtain the dry powder of a polyorganosiloxane graft copolymer (S-1).

### Referential Examples 2 and 3

### Production of polyorganosiloxane graft copolymers (S-2 and S-3)

A compound rubber latex was obtained in the same manner as in Referential Example 1 except that the amount of PDMS-1 sampled in preparation of a compound rubber, the amount of distilled water added and the amounts of n-butyl acrylate and allyl methacrylate added were as described in Table 1. To this compound rubber latex was dropwise added a mixed solution of 10 parts of methyl methacrylate and 0.03 part of cumene hydroperoxide over 20 minutes. After completion of the addition, the reaction solution was kept at an inner temperature of 60°C for 1 hours, and then a mixed solution of 5 parts of glycidyl methacrylate and 0.015 part of cumene hydroperoxide was dropwise added thereto over 10 minutes. After completion of the addition, the reaction solution was kept at an inner temperature of 60°C for 2 hours to complete graft polymerization. Thereafter, coagulation and drying were carried out in the same manner as in Referential Example 1 to obtain polyorganosiloxane graft copolymers S-2 and S-3. The gel content of the compound rubber and the average particle size of the graft copolymer are shown in Table 1.

**Table 1**

| Referential Example | 2 | 3 |
|---|---|---|
| Polyorganosiloxane graft copolymer | S-2 | S-3 |
| PDMS-1 (part) | 138 | 241 |
| Distilled water (part) | 175 | 175 |
| n-Butyl acrylate (part) | 42 | 12 |
| Allyl methacrylate (part) | 0.8 | 0.24 |
| Gel content of the compound rubber (%) | 98 | 96 |
| Average particle size of the graft copolymer (µm) | 0.24 | 0.23 |

### Referential Examples 4 to 6

### Production of polyorganosiloxane graft copolymers (S-4 to S-6)

Two hundreds and forty-seven parts of every compound rubber latex obtained in the same manner as in Referential Example 1 was sampled and put in a separable flask equipped with a stirring blade. After the atmosphere of the flask was replaced by nitrogen, the contents of the flask were heated to 60°C, and a mixed solution of 7.5 parts of glycidyl methacrylate, a monomer shown in Table 2 and 0.04 part of cumene hydroperoxide was dropwise added thereto over 20 minutes. After completion of the addition, the reaction solution was kept at an inner temperature of 60°C for 2 hours to carry out graft polymerization onto the compound rubber. Thereafter, coagulation and drying were carried out in the same manner as in Referential Example 1 to obtain polyorganosiloxane graft copolymers S-4 to S-6. The average particle size of every graft copolymer is shown in Table 2.

**Table 2**

| Referential Example | 4 | 5 | 6 |
|---|---|---|---|
| Graft copolymer | S-4 | S-5 | S-6 |
| Glycidyl methacrylate (part) | 7.5 | 7.5 | 7.5 |
| Methyl methacrylate (part) | 7.5 | | |
| Styrene (part) | | 5.5 | |
| Acrylonitrile (part) | | 2 | |
| n-Butyl acrylate (part) | | | 7.5 |
| Average particle size of the graft copolymer (µm) | 0.24 | 0.24 | 0.24 |

### Referential Example 7

### Production of polyorganosiloxane graft copolymer (S-7)

The latex of a graft copolymer (S-7) was obtained in the same manner as in Referential Example 1 except that 10 parts of glycidyl acrylate was used in place of 10 parts of glycidyl methacrylate. The conversion of glycidyl acrylate was 97.2%, and the average particle size of the graft copolymer latex was 0.23 µm. This latex was coagulated and dried in the same manner as in Referential Example 1 to obtain a dry powder.

### Referential Example 8

### Production of polyorganosiloxane graft copolymer (S-8)

The latex of a graft copolymer (S-8) was obtained in the same manner as in Referential Example 1 except that a mixture of 5 parts of diglycidyl itaconate and 5 parts of methyl methacrylate was used in place of 10 parts of glycidyl methacrylate. The conversion of diglycidyl itaconate and methyl methacrylate was 97.9%, and the average particle size of the graft copolymer latex was 0.23 µm. This latex was coagulated and dried in the same manner as in Referential Example 1 to obtain a dry powder.

### Referential Example 9

### Production of polyorganosiloxane graft copolymer (S-9)

The latex of a graft copolymer (S-9) was obtained in the same manner as in Referential Example 1 except that 10 parts of methyl methacrylate was used in place of 10 parts of glycidyl methacrylate. the conversion of methyl methacrylate was 97.1%, and the average particle size of the graft copolymer latex was 0.23 µm. This latex was coagulated and dried in the same manner as in Referential Example 1 to obtain a dry powder.

### Referential Example 10

### Production of polyorganosiloxane graft copolymer (S-10)

A polyorganosiloxane rubber latex (hereinafter referred to as PDMS-2) was obtained in the same manner as in Referential Example 1 except that the organosiloxane mixture was a mixture of 0.5 part of γ-methacryloyloxypropyldimethoxymethylsilane and 99.5 parts of octamethylcyclotetrasiloxane. The conversion was 91.1%, and the average particle size of the polyorganosiloxane rubber was 0.19 µm.

Two hundreds and ninety-three parts of PDMS-2 was sampled and put in a separable flask equipped with a stirring blade. After the atmosphere of the flask was replaced by nitrogen, the contents of the flask were heated to 60°C. At this temperature, a mixed solution of 0.002 part of ferrous sulfate, 0.006 part of disodium ethylenediaminetetraacetate, 0.3 part of sodium formaldehyde sulfoxylate and 10 parts of distilled water was added, and then a mixed solution of 15 parts of glycidyl methacrylate and 0.04 part of cumene hydroperoxide was dropwise added thereto over 15 minutes. After completion of the addition, the reaction solution was kept at an inner temperature of 60°C for 2 hours to carry out graft polymerization onto the polyorganosiloxane rubber. The number average particle size of the resulting graft copolymer (S-10) was 0.22 µm. This latex was coagulated and dried in the same manner as in Referential Example 1 to obtain a dry powder.

### Referential Example 11

### Production of polyacrylate graft copolymer (S-11)

Two hundreds parts of distilled water and 1 part of sodium dodecylbenzenesulfonate were put in a separable flask equipped with a stirring blade. After the atmosphere of the flask was replaced by nitrogen, the contents of the flask were heated to 50°C, and a mixed solution of 72 parts of n-butyl acrylate, 1.44 parts of allyl methacrylate and 0.3 part of cumene hydroperoxide was added. Thereafter, a mixed solution of 0.002 part of ferrous sulfate, 0.006 part of disodium ethylenediaminetetraacetate, 0.3 part of sodium formaldehyde sulfoxylate and 10 parts of distilled water was added to carry out radical polymerization. The reaction mixture was kept at an inner temperature of 70°C for 2 hours to obtain a polyacrylate rubber latex.

To this rubber latex was dropwise added a mixed solution of 10 parts of methyl methacrylate and 0.03 part of cumene hydroperoxide over 20 minutes. After completion of the addition, the reaction solution was kept at an inner temperature of 60°C for 1 hour, and then a mixed solution of 5 parts of glycidyl methacrylate and 0.015 part of cumene hydroperoxide was dropwise added thereto over 10 minutes. After completion of the addition, the reaction solution was kept at an inner temperature of 60°C for 2 hours to complete graft polymerization. Thereafter, coagulation and drying were carried out in the same manner as in Referential Example 1 to obtain a polyacrylate rubber graft copolymer (hereinafter referred to as S-11).

### Referential Example 12

### Production of polymethacrylimide resin

One hundred parts of sufficiently dried polymethyl methacrylate, 100 parts of toluene, 10 parts of methanol and a primary amine or ammonia shown in Table 3, its amount being shown in Table 3, were fed to an autoclave and reacted at 230°C for 2 hours with stirring. The reaction product thus obtained was extruded and pelletized through a vent-type extruder at a resin temperature of 260°C while removing a volatile gas from the vent. The performance of these polymethacrylimide resins (A-1 to A-3) obtained is shown in Table 3.

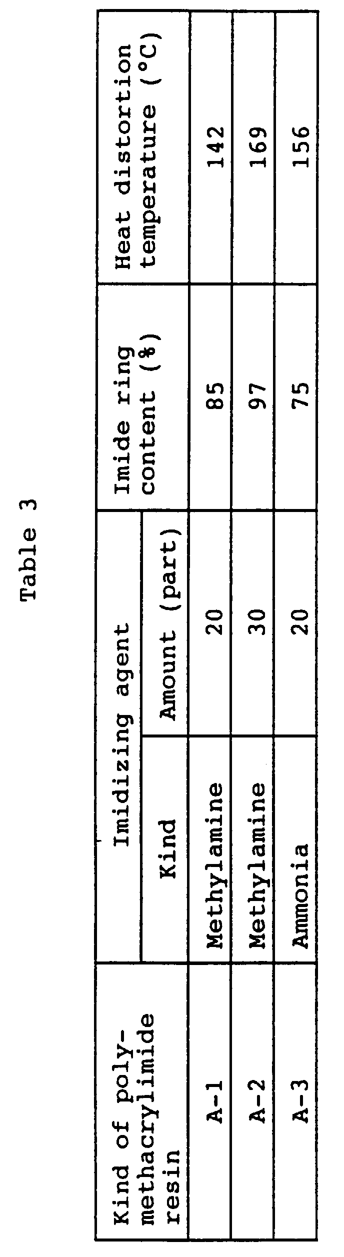

### Examples 1 to 12 and Comparative Examples 1 to 6

Using as the polyamide resin nylon 6 (UBE 6 Nylon 1013NW8 produced by Ube Industries, Ltd.), nylon 6·6 (UBE 66 Nylon 2020B produced by Ube Industries, Ltd.) and nylon 4·6 (UNITIKA Nylon 46 F5000 produced by Unitika Ltd.), these resins and the graft copolymers S-1 to S-11 obtained in Referential Examples were blended in proportions shown in Table 4, and melt-kneaded and pelletized with a twin-screw extruder (TEM-35B produced by Toshiba Machine Co., Ltd.) at a cylinder temperature of 260° to 290°C. The pellet obtained was dried and then molded into test pieces with an injection molding machine (Promat injection molding machine produced by Sumitomo Heavy Industries, Ltd.) at a cylinder temperature of 260° to 290 °C and at a mold temperature of 70°C. The impact resistance was then evaluated with the test pieces.

For comparison, evaluation was also carried out on the following cases: A case wherein the polyamide alone was used, a case wherein a copolymer obtained by grafting methyl methacrylate in place of vinyl monomers containing an epoxy group-containing vinyl monomer, was used (Comparative Example 2), a case wherein a copolymer obtained by grafting monomers containing an epoxy group-containing vinyl monomer onto the polyorganosiloxane rubber, was used (Comparative Example 3) and a case wherein a copolymer obtained by grafting monomers containing an epoxy group-containing vinyl monomer onto the polyacrylate rubber, was used (Comparative Example 4). The results are shown in Table 4.

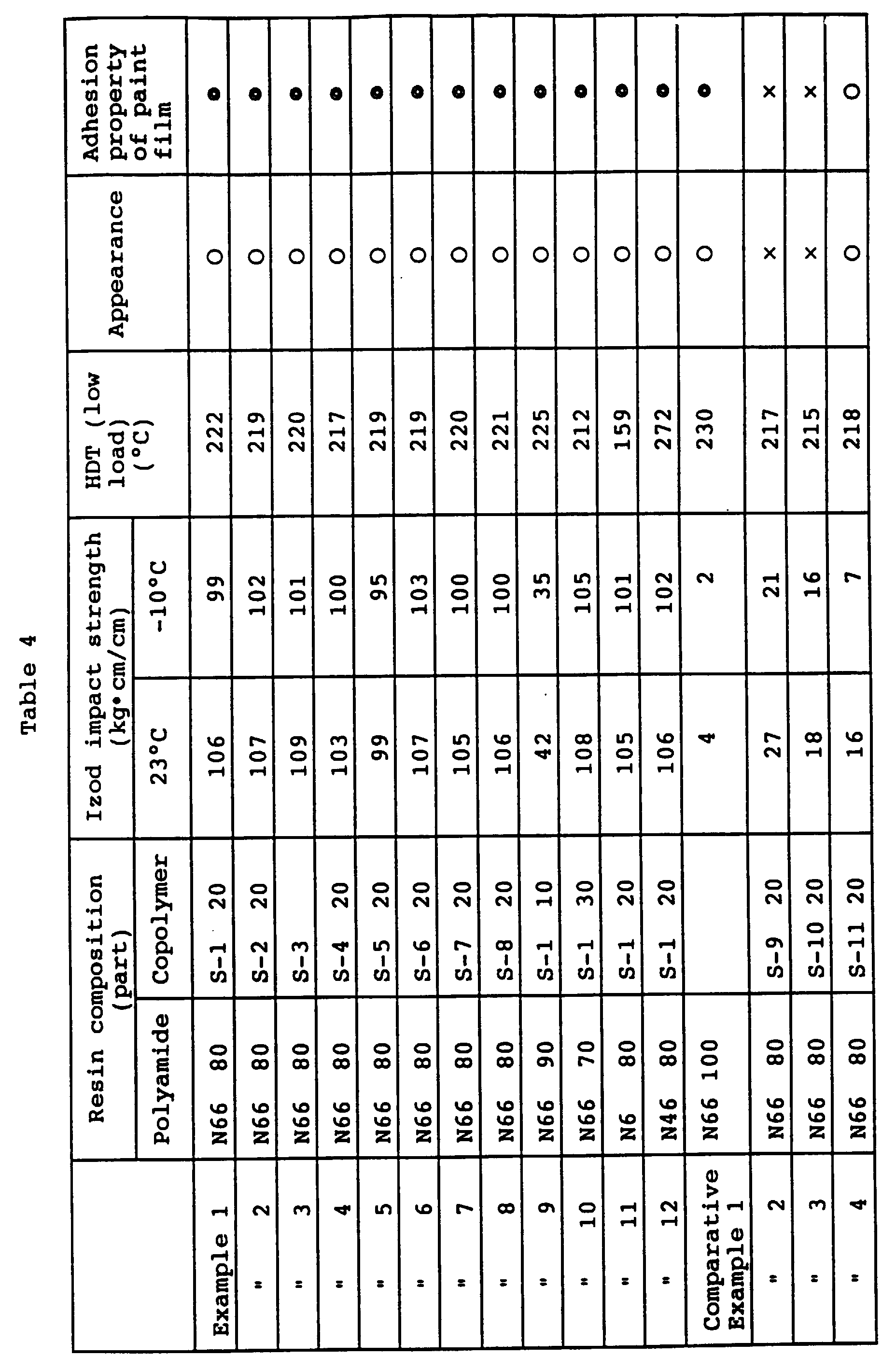

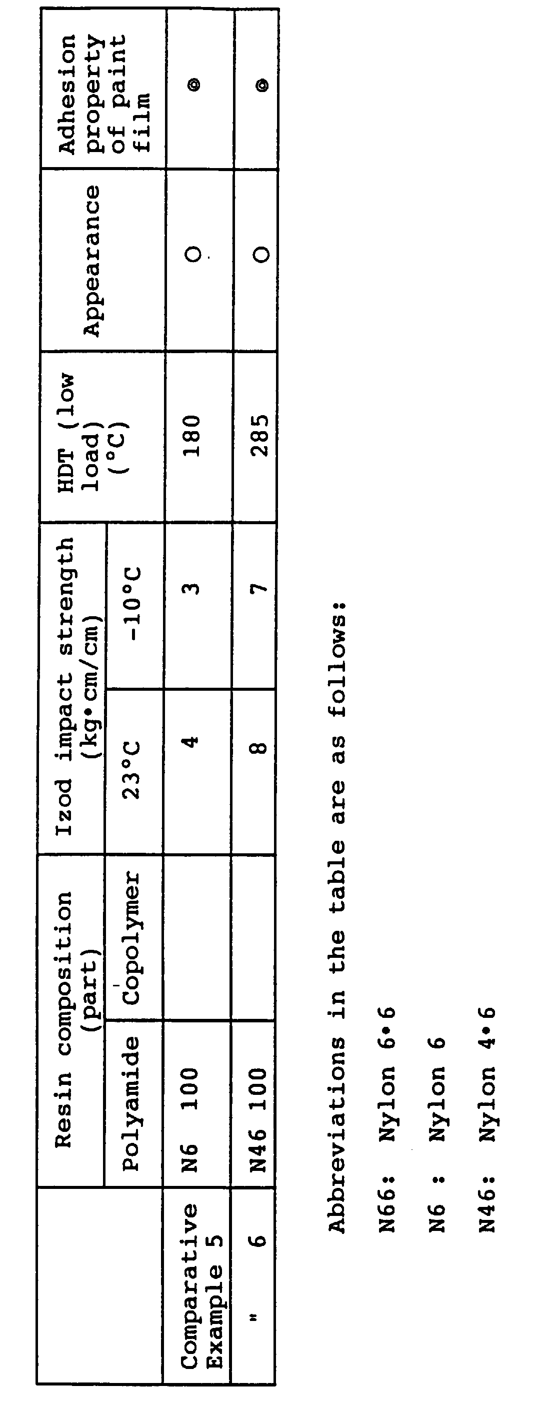

### Examples 13 to 19 and Comparative Examples 7 to 9

Test pieces were prepared by injection molding and evaluated in the same manner as in Example 1 except that a glass fiber (GF), carbon fiber (CF) and talc (TA) were used as a filter and blended in proportions shown in Table 4. The results are shown in Table 5.

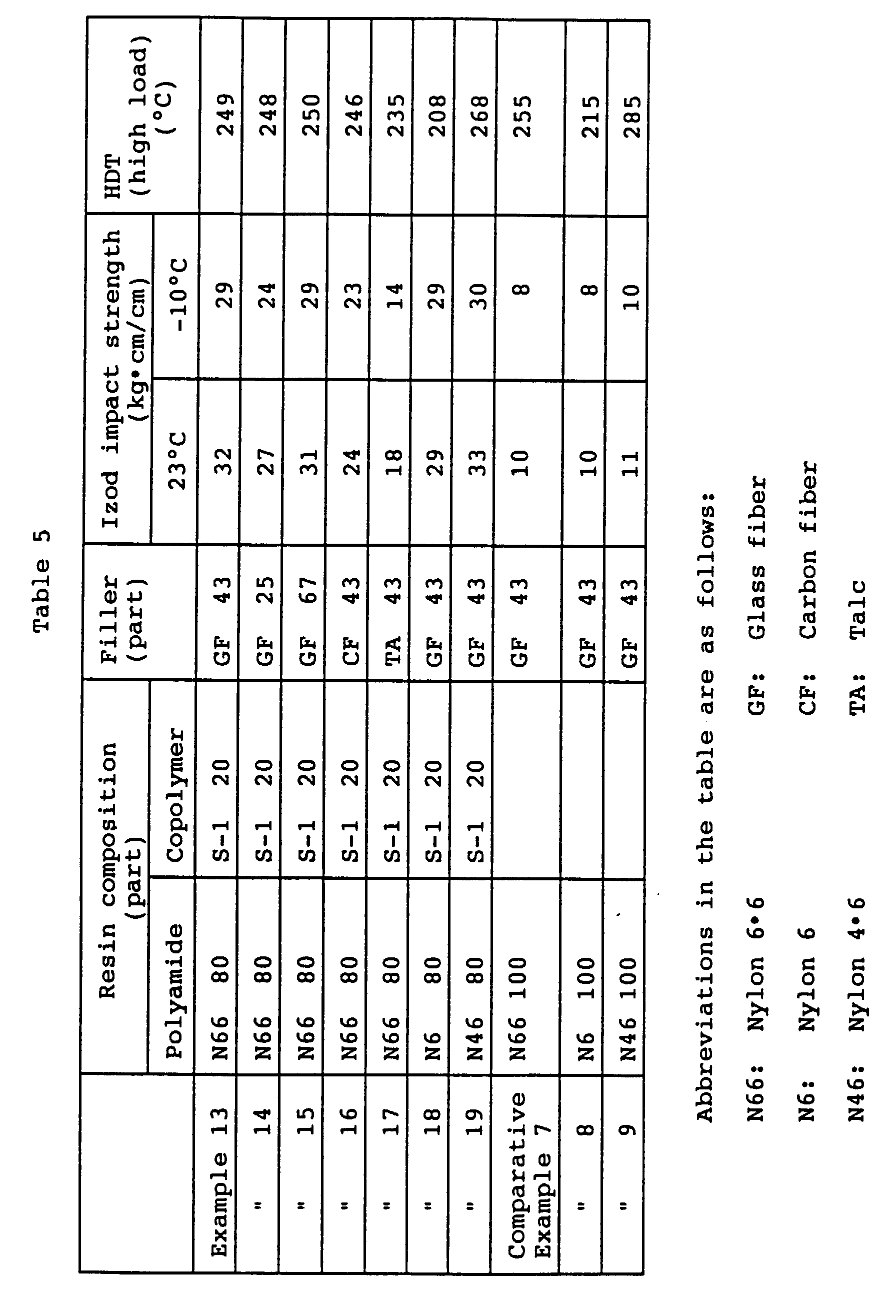

### Examples 20 to 31 and Comparative Examples 10 to 15

The polymethacrylimide resins A-1 to A-3 obtained in Referential Example 12 and the graft copolymers S-1 to S-11 obtained in Referential Examples were blended in proportions shown in Table 6, and melt-kneaded and pelletized with a twin-screw extruder (TEM-35B produced by Toshiba Machine Co., Ltd.) at a cylinder temperature of 280°C. The pellet obtained was dried and then molded into test pieces with an injection molding machine (Promat injection molding machine produced by Sumitomo Heavy Industries, Ltd.) at a cylinder temperature of 280°C and at a mold temperature of 60°C. The impact resistance was then evaluated with the test pieces. The results are shown in Table 6.

For comparison, evaluation was also carried out on the following cases: A case wherein the polymethacrylimide alone was used (Comparative Examples 10 to 12), a case wherein a copolymer obtained by grafting methyl methacrylate in place of vinyl monomers containing an epoxy group-containing vinyl monomer, was used (Comparative Example 13), a case wherein a copolymer obtained by grafting monomers containing an epoxy group-containing vinyl monomer onto the polyorganosiloxane rubber, was used (Comparative Example 14) and a case wherein a copolymer obtained by grafting monomers containing an epoxy group-containing vinyl monomer onto the polyacrylate rubber, was used (Comparative Example 15). The results are shown in Table 6.

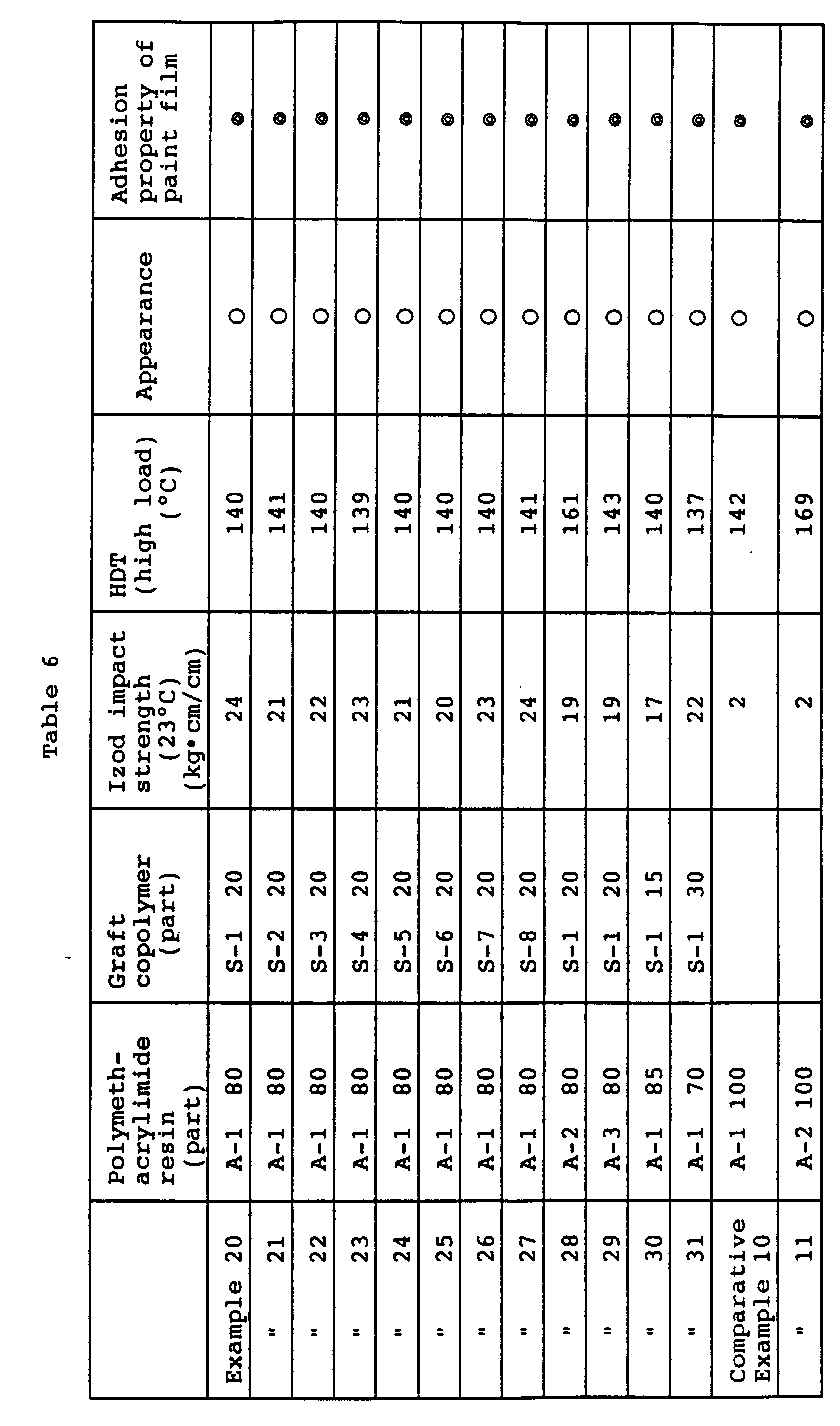

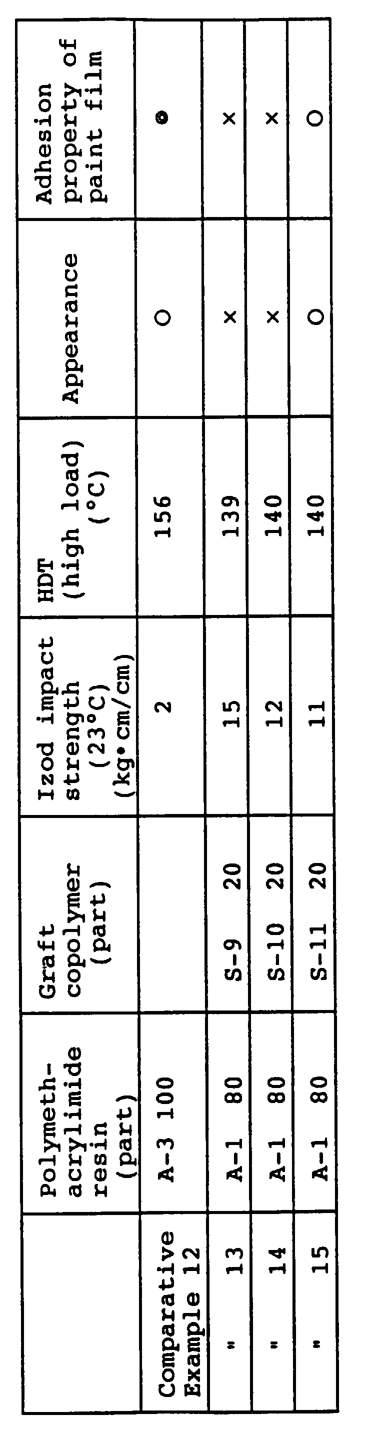

### Example 32 and Comparative Example 16

Seventy parts of the polymethacrylimide resin composition obtained in Example 20 and 30 parts of a glass fiber were blended, and melt-kneaded and pelletized with a twin-screw extruder (TEM-35B produced by Toshiba Machine Co., Ltd.) at a cylinder temperature of 280°C. For comparison, 70 parts of the polymethacrylimide resin A-1 and 30 parts of a glass fiber were blended and pelletized in the same manner as above. The pellet obtained was dried and molded in the same manner as in Example 20. Using the molded product obtained, the impact resistance and heat distortion temperature were evaluated.

As a result, the blend of the polymethacrylimide resin composition and a glass fiber (Example 32) had an Izod impact strength of 16 kg·cm/cm and a heat distortion temperature of 141°C. While the blend of the polymethacrylimide resin and a glass fiber had an Izod impact strength of 8 kg·cm/cm and a heat distortion temperature of 144°C.

### Examples 33 to 42 and Comparative Examples 17 to 20

A polyetherimide resin (Ultem #1000 produced by General Electric Co., Ltd.) and the graft copolymers S-1 to S-11 obtained in Referential Examples were blended in proportions shown in Table 7, and melt-kneaded and pelletized with a twin-screw extruder (TEM-35B produced by Toshiba Machine Co., Ltd.) at a cylinder temperature of 350°C. The pellet obtained was dried and then molded into test pieces with an injection molding machine (Promat injection molding machine produced by Sumitomo Heavy Industries, Ltd.) at a cylinder temperature of 350°C and at a mold temperature of 80°C. The impact resistance was then evaluated with the test pieces. The results are shown in Table 7.

For comparison, evaluation was also carried out on the following cases: A case wherein the polyetherimide alone was used (Comparative Example 17), a case wherein a copolymer obtained by grafting methyl methacrylate in place of vinyl monomers containing an epoxy group-containing vinyl monomer, was used (Comparative Example 18), a case wherein a copolymer obtained by grafting monomers containing an epoxy group-containing vinyl monomer onto the polyorganosiloxane rubber, was used (Comparative Example 19) and a case wherein a copolymer obtained by grafting monomers containing an epoxy group-containing vinyl monomer onto the polyacrylate rubber, was used (Comparative Example 20). The results are shown in Table 7.

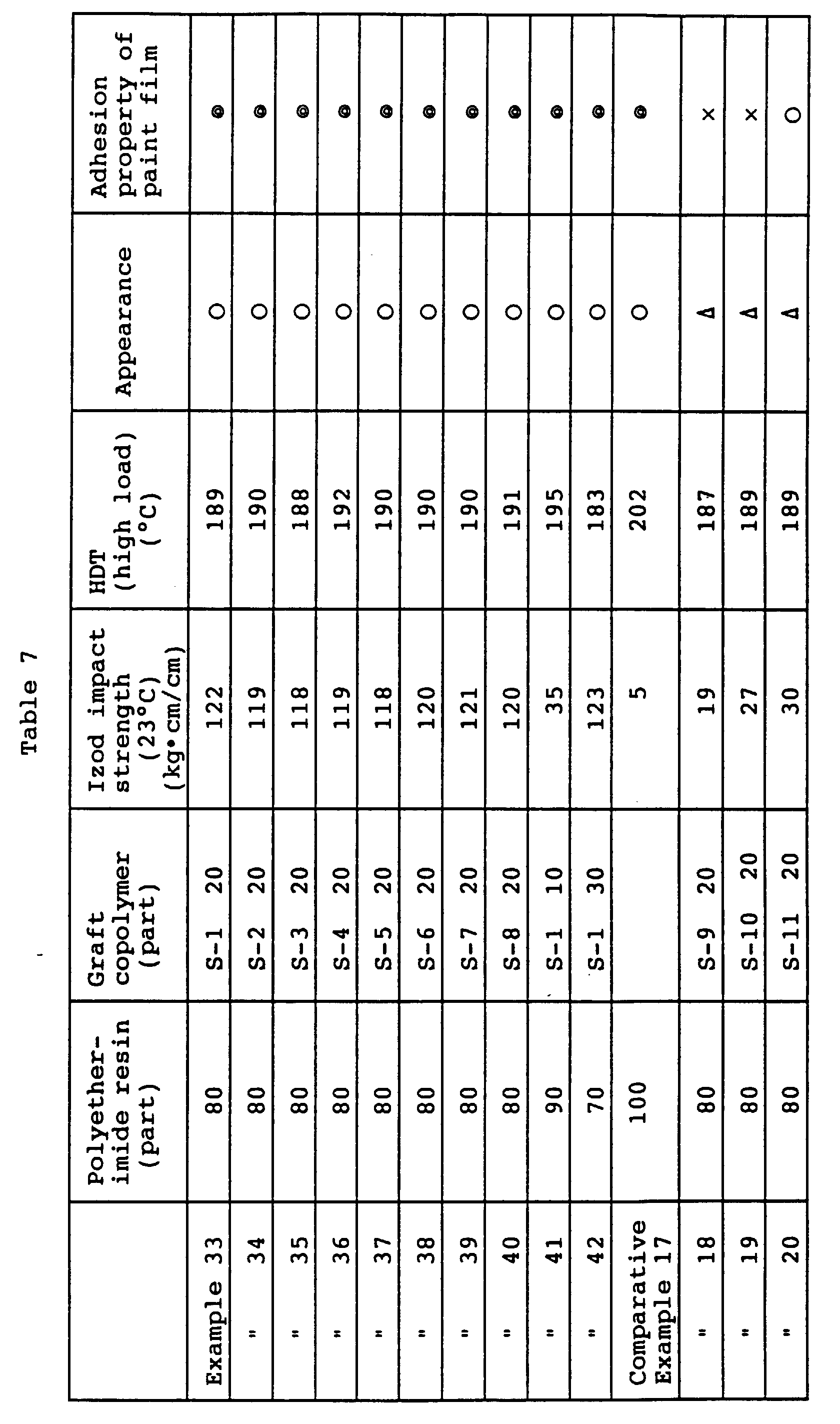

### Example 43 and Comparative Example 21

Seventy parts of the polyetherimide resin composition obtained in Example 33 and 30 parts of a glass fiber were blended, and melt-kneaded and pelletized with a twin-screw extruder (TEM-35B produced by Toshiba Machine Co., Ltd.) at a cylinder temperature of 350°C. For comparison, 70 parts of the polyetherimide resin and 30 parts of a glass fiber were blended and pelletized in the same manner as above. The pellet obtained was dried and molded in the same manner as in example 33. Using the molded product obtained, the impact resistance was evaluated.

As a result, the blend of the polyetherimide resin composition and a glass fiber (Example 43) had an Izod impact strength of 29 kg·cm/cm. While the blend of the polyetherimide resin and a glass fiber had an Izod impact strength of 11 kg·cm/cm.

As described above, the thermoplastic resin composition of the present invention is excellent in impact resistance, so that it can be used under severer conditions than do the conventional ones. Consequently, the thermoplastic resin composition has a characteristic that development of a wider range of use becomes possible.

## Claims

1. A thermoplastic resin composition comprising (A) 60 to 99 parts by weight of at least one thermoplastic resin selected from the group consisting of polyamide resins, polymethacrylimide resins and polyetherimide resin and (B) 1 to 40 parts by weight of a polyorganosiloxane graft copolymer obtained by graft-polymerizing one or more kinds of vinyl monomer containing at least an epoxy group-containing vinyl monomer onto a polyorganosiloxane compound rubber having a structure in which a polyorganosiloxane rubber component and a polyalkyl (meth)acrylate rubber component have been inseparably united with each other, the total amount of both the components (A) and (B) being 100 parts by weight.

2. A thermoplastic resin composition according to Claim 1 which additionally contains a filler in amount of 10 to 300 wt.% based on the total weight of the components (A) and (B).

3. A thermoplastic resin composition according to Claim 1, wherein the thermoplastic resin is a polyamide resin.

4. A thermoplastic resin composition according to Claim 2, wherein the thermoplastic resin is a polyamide resin.

5. A thermoplastic resin composition according to Claim 1, wherein the thermoplastic resin is a polymethacrylimide resin.

6. A thermoplastic resin composition according to Claim 2, wherein the thermoplastic resin is a polymethacrylimide resin.

7. A thermoplastic resin composition according to Claim 1, wherein the thermoplastic resin is a polyetherimide resin.

8. A thermoplastic resin composition according to Claim 2, wherein the thermoplastic resin is a polyetherimide resin.

9. A thermoplastic resin composition according to any one of Claims 1 to 8, wherein the polyorganosiloxane graft copolymer is one having an average particle size of 0.08 to 0.5 µm.

10. A thermoplastic resin composition according to Claim 1 or 2, wherein the epoxy group-containing vinyl monomer is one or more members selected from the group consisting of glycidyl methacrylate, glycidyl acrylate and diglycidyl itaconate.

11. A thermoplastic resin composition according to Claim 1 or 2, wherein the amount of a component derived from the epoxy group-containing vinyl monomer in the polyorganosiloxane graft copolymer is 2 to 30 wt.%.

12. A thermoplastic resin composition according to Claim 1 or 2, wherein the amount of the graft branch component in the polyorganosiloxane graft copolymer is 2 to 60 wt.%.

13. A thermoplastic resin composition according to Claim 2, wherein the filler is a glass fiber or carbon fiber.

## Patentansprüche

1. Thermoplastische Harzzusammensetzung, umfassend
(A) 60 bis 99 Gew.-Teile mindestens eines thermoplastischen Harzes, gewählt aus der Polyamidharze, Polymethacrylimidharze und Polyetherimidharze umfassenden Gruppe, und
(B) 1 bis 40 Gew.-Teile eines Polyorganosiloxan-Pfropfcopolymeren, erhalten durch Pfropfpolymerisieren einer oder mehrerer Arten eines Vinylmonomeren, enthaltend mindestens ein Epoxygruppen enthaltendes Vinylmonomer, auf einen Polyorganosiloxan-Mischkautschuk mit einer Struktur, bei der eine Polyorganosiloxan-Kautschukkomponente und eine Polyalkyl(meth)acrylat-Kautschukkomponente in untrennbarer Weise miteinander vereinigt worden sind,
wobei die Gesamtmenge der beiden Komponenten (A) und (B) 100 Gew. -Teile beträgt.

2. Thermoplastische Harzzusammensetzung nach Anspruch 1, enthaltend weiterhin einen Füllstoff in einer Menge von 10 bis 300 Gew.-%, bezogen auf das Gesamtgewicht der Komponenten (A) und (B).

3. Thermoplastische Harzzusammensetzung nach Anspruch 1, wobei das thermoplastische Harz ein Polyamidharz ist.

4. Thermoplastische Harzzusammensetzung nach Anspruch 2, wobei das thermoplastische Harz ein Polyamidharz ist.

5. Thermoplastische Harzzusammensetzung nach Anspruch 1, wobei das thermoplastische Harz ein Polymethacrylimidharz ist.

6. Thermoplastische Harzzusammensetzung nach Anspruch 2, wobei das thermoplastische Harz ein Polymethacrylimidharz ist.

7. Thermoplastische Harzzusammensetzung nach Anspruch 1, wobei das thermoplastische Harz ein Polyetherimidharz ist.

8. Thermoplastische Harzzusammensetzung nach Anspruch 2, wobei das thermoplastische Harz ein Polyetherimidharz ist.

9. Thermoplastische Harzzusammensetzung nach mindestens einem der Ansprüche 1 bis 8, wobei das Polyorganosiloxan-Pfropfcopolymer ein solches mit einer durchschnittlichen Teilchengröße von 0,08 bis 0,5 µm ist.

10. Thermoplastische Harzzusammensetzung nach Anspruch 1 oder 2, wobei das Epoxygruppen enthaltende Vinylmonomer ein oder mehrere Vertreter sind, gewählt aus der Glycidylmethacrylat, Glycidylacrylat und Diglycidylitaconat umfassenden Gruppe.

11. Thermoplastische Harzzusammensetzung nach Anspruch 1 oder 2, wobei die Menge der von dem Epoxygruppen enthaltenden Vinylmonomer abgeleiteten Komponente in dem Polyorganosiloxan-Pfropfcopolymer 2 bis 30 Gew. -% beträgt.

12. Thermoplastische Harzzusammensetzung nach Anspruch 1 oder 2, wobei die Menge der Pfropfzweigkomponente in dem Polyorganosiloxan-Pfropfcopolymer 2 bis 60 Gew.-% beträgt.

13. Thermoplastische Harzzusammensetzung nach Anspruch 2, wobei der Füllstoff Glasfaser oder Kohlenstoffaser ist.

## Revendications

1. Une composition de résine thermoplastique comprenant (A) 60 à 99 parties en poids d'au moins une résine thermoplastique choisie dans le groupe formé par les résines de polyamides, les résines de polyméthacrylimide et les résines de polyétherimides et (B) 1 à 40 parties en poids d'un copolymère polyorganosiloxane greffé obtenu en polymérisant par greffage une ou plusieurs sortes de monomères vinyliques contenant au moins un monomère vinylique porteur de groupe époxy sur un caoutchouc mixte de polyorganosiloxane ayant une structure dans laquelle un composant de caoutchouc de polyorganosiloxane et un composant de caoutchouc de poly((méth)acrylate d'alkyle) ont été unis inséparablement l'un à l'autre, la quantité totale des deux composants (A) et (B) étant de 100 parties en poids.

2. Une composition de résine thermoplastique selon la revendication 1 qui renferme en outre une charge en une proportion de 10 à 300 % en poids sur la base du poids total des composants (A) et (B).

3. Une composition de résine thermoplastique selon la revendication 1 dans laquelle la résine thermoplastique est une résine de polyamide.

4. Une composition de résine thermoplastique selon la revendication 2 dans laquelle la résine thermoplastique est une résine de polyamide.

5. Une composition de résine thermoplastique selon la revendication 1 dans laquelle la résine thermoplastique est une résine de polyméthacrylimide.

6. Une composition de résine thermoplastique selon la revendication 2 dans laquelle la résine thermoplastique est une résine de polyméthacrylimide.

7. Une composition de résine thermoplastique selon la revendication 1 dans laquelle la résine thermoplastique est une résine de polyétherimide.

8. Une composition de résine thermoplastique selon la revendication 2 dans laquelle la résine thermoplastique est une résine de polyétherimide.

9. Une composition de résine thermoplastique selon l'une quelconque des revendications 1 à 8, dans laquelle le copolymère polyorganosiloxane greffé présente une grosseur moyenne de particules de 0,08 à 0,5 µm.

10. Une composition de résine thermoplastique selon la revendication 1 ou 2, dans laquelle le monomère vinylique porteur de groupe époxy est choisi dans le groupe formé par le méthacrylate de glycidyle, l'acrylate de glycidyle, l'itaconate de glycidyle.

11. Une composition de résine thermoplastique selon la revendication 1 ou 2, dans laquelle la proportion d'un composant dérivé du monomère vinylique porteur de groupe époxy dans le copolymère polyorganosiloxane greffé est de 2 à 30 % en poids.

12. Une composition de résine thermoplastique selon la revendication 1 ou 2, dans laquelle la proportion du composant greffon dans le copolymère polyorganosiloxane greffé est de 2 à 60 % en poids.

13. Une composition de résine thermoplastique selon la revendication 2, dans laquelle la charge est de la fibre de verre ou de la fibre de carbone.
